# EUROPEAN PATENT SPECIFICATION

(11) **EP 1 506 335 B1**
(45) Date of publication and mention of the grant of the patent: **11.08.2010**
(21) Application number: 02736004.9
(22) Date of filing: 23.05.2002
(51) Int. Cl.: D06M 10/02, D21H 25/04, B29C 59/14, D06M 11/52

(54) **METHOD FOR PROCESSING MATERIALS WITH PLASMA**
VERFAHREN ZUR BEHANDLUNG VON MATERIALIEN MIT PLASMA
PROCEDE DE TRAITEMENT DE MATERIAUX PAR PLASMA

(43) Date of publication of application: 16.02.2005
(73) Proprietor: Universita' Degli Studi Di Milano - Bicocca, I-20126 Milano (IT); Stazione Sperimentale per la Seta, 20133 Milano (IT)
(72) Inventor: RICCARDI, Claudia, c/o Università degli Studi di Milano-Bicocca, I-20126 Milano (IT); MARCANDALLI, Bruno, I-20069 Vaprio D'Adda, Milano (IT); MASSAFRA, Maria, Rosaria, I-20031 Cesano Maderno, Milano (IT)
(74) Representative: Long, Giorgio
(86) International application number: PCT/IT2002/000335
(87) International publication number: WO 2003/100156

(56) References cited:
- DE-A- 4 100 787
- DE-A- 19 702 124
- GB-A- 2 254 854
- US-A- 3 674 667
- US-A- 4 404 256
- PATENT ABSTRACTS OF JAPAN vol. 012, no. 110 (C-486), 8 April 1988 (1988-04-08) & JP 62 235339 A (MASUHIRO KOKOMA;OTHERS: 02), 15 October 1987 (1987-10-15)

## Description

This invention concerns a method for processing various types of materials such as woven fabrics, non-woven fabrics, yarns, paper and film of any type and similar materials.

In particular, this invention concerns a method for processing said materials comprising a stage of processing with plasma.

Said method permits the modification of the physical and chemical properties of the materials described above.

As far as woven fabrics, non-woven fabrics and yarns in general are concerned, at present their practical applicability and commercial value depend on their appearance, hand, and the physical and mechanical characteristics that make said materials suitable for the use for which they are destined.

The methods that are usually used to obtain these characteristics for woven fabrics, non-woven fabrics, and yarns comprise various stages and in particular, dyeing, printing and finishing.

In particular, the dyeing stage and the printing stage for woven fabrics, non-woven fabrics and yarns comprise a number of treaments aimed at giving the material a determined colour.

The finishing stage allows, by means of the use of chemical products or physical-mechanical treatments, to give to woven fabrics, non-woven fabrics and yarns softness, hand, water repellent and oil repellent characteristics, and to obtain certain special colouring or lustrous effects.

Widely speaking, the finishing stage comprises chemical treatments such as, among others, the application of size and pigment, doping, and mechanical processes aimed at improving appearance. Strictly speaking, it consists in applying layers of coating, protection, and surface products. As far as paper is concerned, the treatment can occur before or after sheet coating or on the fibre prior to sheet production.

The treatment stages described above involve the use of large quantities of water, and above all, chemical agents of various nature.

As well as consuming natural resources, this method also has an impact on the environment as chemical agents are discharged in waste water or released into the atmosphere.

In general, the use of plasma is known for the treatment of different types of materials aimed at obtaining special structural and functional characteristics.

With regard to this aspect, numerous experiments have been conducted to evaluate the possibility to use plasma for treating materials as an alternative to some of the treatments described above.

In fact, plasma treatment would allow to eliminate or at least reduce the use of large quantities of water as well as of polluting and toxic products harmful for man.

In particular, it has been demonstrated that fluorocarbons and silicon; silane and siloxane compounds can be used in the plasma form, when they polymerise to form a film on the surface of said materials thus conveying waterproof properties. These polymer films are absorbed by the surface of said materials, but are not chemically bound.

As a result, such treatments as washing with water and solvent or mechanical action can cause separation of these films from the material surface, which looses its water resistance.

For this reason there has been a strong need for a method for the treatment of woven fabrics, non-woven fabrics, yarns, paper, films in general, and similar products which allows to avoid, or at least to reduce the use of chemical substances during the processing stages.

Documents DE-A-4100787, GB-A-2254854, US-A-3674667, US-A-4404256, JP(A) 62235339 (abstract) and DE-A-19702124 disclose a method for the processing of materials wherein the surface of said materials is treated with cold plasma and wherein this treatment step is carried out with SF₆.

Therefore the basic problem underlying this invention is to create a method to transmit different functional properties to the surfaces of woven fabrics, non-woven fabrics, yarns, paper and film in general and similar products, avoiding the large number of problems that arise when traditional processing methods are used.

This problem is solved by a method for treating with plasma woven fabric, non-woven fabric, yarn, paper and film and similar materials, according to the principal claim set forth herein. Further characteristics and the advantages provided by this method will be outlined in the description below.

Following a large number of experiments it has surprisingly been found that said materials can advantageously acquire water and oil repellent properties, when they undergo standard processing stages after treatment with plasma generated with a gas comprising SF₆

The plasma treatment phase of woven fabrics, non-woven fabrics, yarn, paper and film in general and similar materials is carried out with SF₆ gas or its mixtures with noble gases.

The plasma used for processing materials according to this invention is cold plasma; in other words, the temperature of the total gas mass at the plasma state is approximately the same as room temperature.

Moreover, said plasma is produced under vacuum, that is - in special chambers containing gas at pressure lower than atmospheric pressure, preferably in the range from 0,1 to 20 mbar.

Plasma can be generated by different electromagnetic sources, i.e. sources with a different frequency and geometry.

In fact, the physical and chemical processes that occur on the surfaces of the material to be treated depend mainly on the plasma parameters, the pressure of the gas used to generate plasma, and the electrical potential of the sample compared to the plasma potential; that is - electrical fields near the sample. The electrical fields produce currents with positive or negative electric charges that interact with the substratum, bombarding it, or simply charging it electrically. These fields can be controlled by polarising the sample support (or the sample itself) or by placing the sample in the ionic sheath generated near the antenna with a negative electrical potential of many hundreds of volts (between 0 and 800 V) in an area of only a few millimetres (between 1 and 10 mm).

By contrast, these processes are not strictly dependant on the type of source. However, at pressure values comprised in the range between 0,1 and 1 mbar it is preferable to use low frequency and radio frequency electromagnetic sources, while at pressure values between 10 and 20 mbar plasma can be generated more easily with a microwave source.

Plasma parameters are determined by the so-called discharge parameters, i.e. source parameters such as, for instance, electrical power that can range from 50 to 200 W, the geometry of the source that produces the plasma (capacitive, inductive source), the frequency of the electromagnetic radiation used to produce the plasma, and the residual vacuum inside the chamber in which the process is carried out. In turn, the vacuum also depends on the residual humidity level and on any degassing of the materials to be processed, or in other words, on the flow of the volatile substances leaving the surface of the materials, and the degassing of the internal structures of the reactor.

The cold plasma thus generated is characterised by parameters such as a density of electrons comprised in the range between 10⁸ and 10¹¹ cm⁻³ and electronic temperatures in the range between 1 and 15 eV, i.e. the average kinetic energy calculated as (ek_{B}T/m)^{1/2} (e=1, 9 10⁻¹⁹ C, k_{B}=1,38 10⁻²³ J/K, m= 9, 1 10⁻³¹ kg, T absolute temperature in Kelvin), while the ions and neutral particles are approximately at room temperature, and the density of the ions can vary from 10⁸ to 10¹¹ cm⁻³.

Treatment with this type of plasma allows to avoid any thermal damage to processed materials.

Cold plasma treatment time shall not exceed, as a rule, 15 minutes, preferably, 10 minutes, or even better, 5 minutes.

It was surprisingly found that in order to obtain excellent water and oil repellent characteristics the best results were obtained with SF₆ even in mixtures with other gases, such as noble gases, in the conditions set forth in claim 1.

Said types of plasma under vacuum can be employed according to discontinuous or continuous methodology.

### Discontinuous methodology

The discontinuous methodology consists of two stages: during the first stage, the material to be treated is placed in a chamber that is brought to a pressure value lower than that of processing gas.

Having substantially extracted all air contained in the chamber, processing gas is fed into the chamber.

During the second stage, plasma is produced and treatment is controlled. In fact plasma can be produced using various electromagnetic sources, i.e. sources with different frequencies. Process operating conditions are controlled through measurement of plasma parameters.

Processing time is less than 15 minutes and treatment can be repeated several times.

Moreover, after each treatment, the material is immersed for a certain period in gases containing air or oxygen and then undergo another treatment with the same or a different gas. This methodology is used when limited quantities of material are loaded: it is applied to materials having defined dimensions.

A plant composed of several vacuum chambers can be used: for example - a chamber to load the material and create vacuum, the following one for plasma treatment, and a final chamber for degassing and unloading the material. Once the material has been loaded in the first chamber, this is closed and air extracted until a pressure lower than treatment pressure is reached. Once the vacuuming process is completed, the material is transferred to the processing chamber at a pressure equal or higher than that of the two adjacent chambers, where plasma is created.

In this way the environment where the treatment is made is not contaminated by residual gases produced at the vacuuming and degassing stages.

As an alternative, barriers can be inserted in the form of hollow space between adjacent chambers to insulate the chambers.

The material is treated in the processing chamber and, after treatment that lasts less than 20 minutes, it is transferred to the degassing and unloading chamber where pressure is lower than in the processing chamber. Following this stage the degassing and unloading chamber is opened and the material is removed.

After removal of the material, the chamber is degassed and the cycle is started again.

If the plasma stage requires several successive plasma treatments, using different gas mixtures, the material can be treated in a system comprised of several processing chambers. These chambers are positioned between the loading and vacuuming chamber and the unloading and degassing chamber. Or, for cyclic treatment, the material can be left in special chambers to be treated again later.

### Continuos methodology.

The continuos methodology can be applied according to the various systems described below.

### I) Roll to roll system: this is applied to fine rolled materials such as woven fabrics, non-woven fabrics, paper, yarns and film.

It consists of a system for unwinding and rewinding the material in a processing chamber insulated from the surrounding environment. The roll-to-roll treatment is carried out in a low pressure chamber where the woven fabric, non-woven fabric, paper, film, or yarn is unwound and pulled through the plasma for treatment, then rewound on its roll in the vacuum chamber. This system consists of a vacuum chamber that can be vacuumed thanks to a pump system and where the gas flow can be kept at the desired pressure. In the front part of the vacuum chamber an electric charge can be produced and plasma generated using as a source an antenna supplied by a transmission system for instance based on radio frequency, microwave, or simply a static electrical field. Plasma production systems are the same as those described in point I.

### II) Continuous air-vacuum-air system: this can be applied to all materials.

The continuous process can take place in a treatment chamber where the materials, preferably fabric or yarn, paper or film are pulled in a continuous mode through the chamber from the outside through seals that improve tightness to environmental pressure. According to this configuration the material enters and exits through the seals and the process is carried out in a continuous mode. Several pumping chambers must be provided to obtain the vacuum necessary for vacuum plant of this type.

This technique can be applied to any of the materials described above and for any employment destination and can be used with any type of cold plasma reactor in order to improve or modify surface characteristics without altering mass characteristics obtained through previous processing, .as well as the intrinsic natural properties of the materials themselves.

Regardless of the system adopted, in cold plasma environments physical, mechanical and volume performance characteristics remain unchanged. In fact plasma treatment is essentially limited to the contact zone, i.e. the surface of the material, and the result of the process refers to a depth ranging from 1 nanometer to 1 micrometer.

As an alternative to the methodologies described above a methodology can be set up based on the use of crown plasma at atmospheric pressure.

In general, regardless of the method adopted, plasma treatment includes generally the following stages either individually or in any combination whatsoever:
a) removal of upper layers from the surface of the material (ETCHING);
b) surface insertion of atoms or chemical groups (GRAFTING) where the continuous flow of reactive components produced in the plasma favour their absorption in the material to be processed, thus facilitating the insertion of functional groups on the surface of the material;
c) activation of the surface through the breaking up of chemical bonds and the generation of free radicals on the surface;
d) spontaneous formation of new bonds on the surface without the addition of plasma reactive components.

As stated previously, the method for the processing of materials contemplated in this invention comprises a plasma application stage that can be carried out prior to any of the materials' processing stages, beginning from the bleaching of woven fabrics, non-woven fabrics, yarns and paper.

For yarns, the method of processing comprises a plasma treatment step which can be carried out preferably before any of the yarn processing stages after degumming.

For paper and film, the treatment can be made after the stage that precedes dyeing.

It was also surprisingly found that plasma treatment of the surface of materials above all enhances their properties and adds water repellent properties to finished materials.

An example of processing procedure on the materials according to this invention, without limitation, is set out here below.

Although the process described herein was carried out on laboratory scale, it can be easily transposed into industrial scale by an expert in this sector.

Process for rendering water-proof the surfaces of materials such as woven materials, non-woven materials, yarns, paper, film and similar materials. This process is preferably carried out using SF₆ even mixed with other gases such as noble gases.

The water-proofing procedure is conducted under vacuum at a pressure between 0,1 and 10 mbar, preferably between 0,2 mbar and 2 mbar, and even better between 0,2 mbar and 0,6 mbar. The density of the electronic plasma is approximately 10⁸ cm³ while the density of ionic plasma is 10¹¹ cm⁻³_{.}

The ion temperature ranges between 1-10 eV, preferably between 3 and 8 eV, and even more preferably between 4 eV and 7 eV and the processing time is less than 15 minutes,_preferably between 3 and 8 minutes, and even more preferably between 4 and 6 minutes.

In a radio frequency or low frequency plasma reactor, treatment can be carried out as follows.

A sample of a size variable from 100 cm² to 400 cm² mounted on a mobile support is placed in a chamber that is brought to a pressure lower than that of the process gas, namely at a pressure lower than 10⁻² mbar, in order to degas the sample.

In fact it was observed that in general the degassing of the material, conducted in such a manner that the surface of the material is free of all residual gas and water steam, provides the advantage of cleaning the surface of any type of material so that subsequent plasma treatment can be performed more effectively.

The degassing pressure depends on the type of material, and more specifically on the residual humidity rate of the material. The higher the humidity rate, the lower the residual pressure must be.

For example, the residual pressure of viscose, stated in mbar of N₂ equivalent, ranges between 5×10⁻⁵ and 5×10⁻⁴ mbar of N₂ equivalent, the residual pressure of cotton ranges between 5×10⁻⁴ and 5×10⁻³ mbar of N₂ equivalent, the residual pressure of film, PET, technical fabrics (Kevlar, carbon fibres and similar fabrics) ranges between 10⁻² and 10⁻¹ mbar of N₂ equivalent. Then the chamber containing the sample is filled with gas and plasma is generated with a radio frequency or low frequency source. Treatment lasts less than 15 minutes, preferably from 1 to 5 minutes for cotton, viscose, paper, and yarns, and less than 2 minutes for PET.

The results obtained with the method described above are set out here below.

It should be noted however that this method could be used with any one of the three systems described previously to obtain basically the same results.

Water resistance effect is generally evaluated based on the determination of the angle of contact (the angle that the drop of water forms with the surface with which it is in contact) and the absorption time of a drop of water of 200 µl, or even better, the evaporation time for the said drop of water on the surface of the material.

In particular, it was observed that materials maintain excellent water repellent properties during their natural aging process, i.e. during the period when they are normally used according to their function.

In fact although water resistance reduces slightly over the first few weeks of use due to the rearrangement of surface fibres, it stabilizes over time and lasts then for long periods because of the covalent bonding of fluorine with carbon.

Aging of the material is the result of the resettling of the surface, i.e. surface polymer chains, that bring part of the underlying fibres to the surface (in other words - the portion that has not been in contact with plasma).

Even mechanical aging tests gave excellent results with regard to stability and permanent water repellent capacity. In particular, this mechanical aging test was effected using standard rubbing tests on laboratory scale.

As an example, the tests were performed on PET. The reduction of the water repellent effect on PET during natural aging is minimum.

Following the experimental tests it was observed that after a year's natural aging the contact angles were over 120 degrees, while the absorption time for a drop of water of 200 µl (evaporation time of the drop) reduced from 150 seconds to a stable time of 120 seconds.

When PET is subject to mechanical aging tests the loss of water repellent capacity appeared after approximately 100 rubbing actions.

Moreover, it was surprisingly found that with plasma treatment as described in this invention, the Fluorine/Carbon F/C ratio, which measures the percentage of fluorine on the treated surface of any materials obtained through XPS analysts, was higher than 9:1. This means that a large number of covalent fluorine carbon bonds were formed, and that the surface of the materials was highly hydrophobic.

Another advantage was that fluorine grafting on the surface increased even further during multiple treatment in the conditions set forth in claim 1., or in other words, when the material was plasma treated with successive cycles. In this cause, multiple treatments cause saturation of the surface with fluorine carbon bonds so that the surface becomes also oil repellent (for treatments up to 10 cycles).

In addition, since fluorine grafting leads to the formation of covalent fluorine carbon bonds, these are very stable and break-resistant, unlike those obtained with fluorocarbons, silicon, silane and siloxane compounds, used in known techniques.

It should be noted that the time between one treatment and another is advantageously reduced as after each treatment, the material is immersed in gases other than SF₆ containing air or oxygen.

Multiple treatment is very efficient on all the materials mentioned in this invention, i.e. after multiple treatment the surface of all the materials is practically saturated with fluorine-carbon bonds.

Certain special effects can be obtained through the creation of areas with a different degree of water-resistance, by treating the surface locally with a plasma brush obtained, for instance, with a small source (cylindrical or spherical) mounted on a mobile support that moves on the material. In this manner patterns, spots, writing and similar markings can be created on the material surface, making certain zones selectively waterproof. In this way certain zones will react differently to colorants during colouration, for example.

Plasma treatment as described in this invention results as efficient on all materials.

For these materials the results can be summed up in the following table where:
- "NT" stands for Not Treated material;
- "T" stands for Treated material;
- "Abs" stands for the time necessary for a drop of water to be absorbed by the surface, measured in minutes;
- "Deg" is the time before a drop of water is degraded - or before the surface is modified by the drop (when the surface starts to become wet without the drop being completely absorbed) measured in minutes;
- "Cont" is the angle of Contact in degrees;
- "Roll Off" is the Roll Off angle measured in degrees;
- "Time" is the duration of the plasma treatment measured in seconds;
- "Pressure" is the process gas pressure used for cold plasma measured in mbar;
- "N#" is the type and number of the sample;
- "Inf" shows that a 200 µl drop of water has evaporated without being absorbed;
- "Nul" shows the absence of drop degradation;
- "-" shows that measurement was not possible;
- "film-polyp" stands for polypropylene film material;
   *For paper, water steam permeation rate was also measured. After plasma treatment, this rate reduced by 57% .
   **For PET, the best results were obtained with pressure between 0,2 mbar and 0,4 mbar, with temperatures of approximately 5 eV and 1 minute duration.

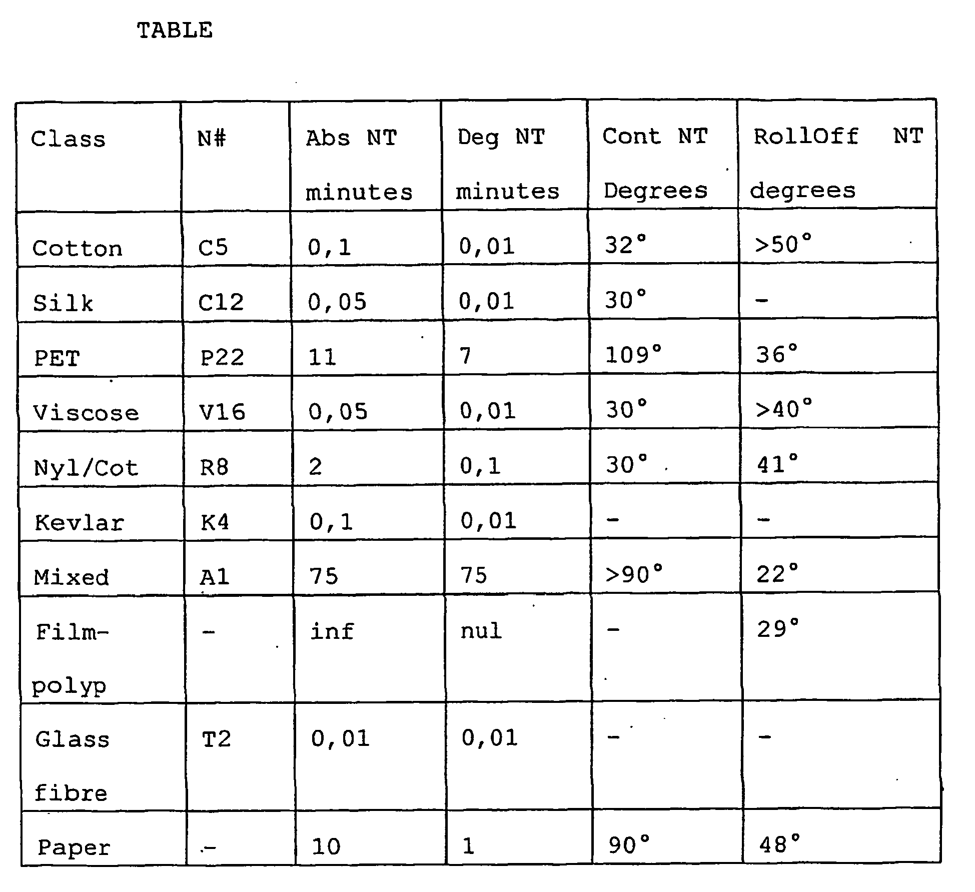

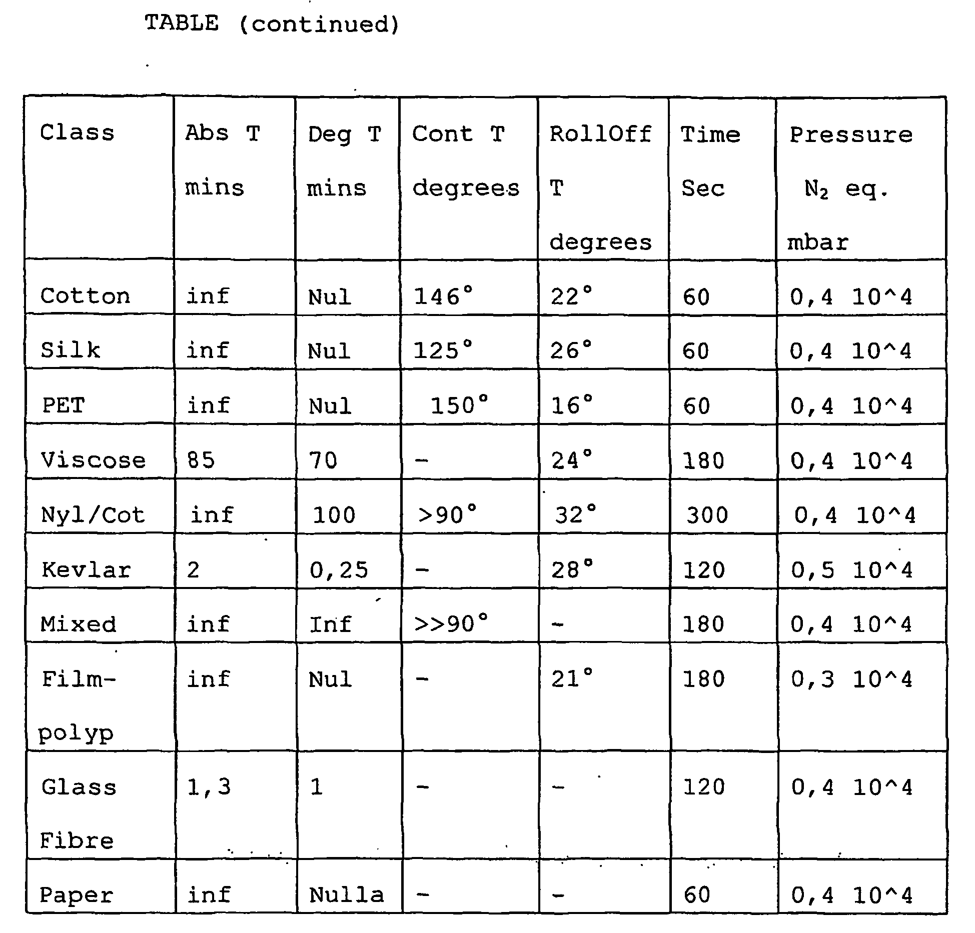

As can be observed in the above table, the method for treating materials comprising plasma applying on the surface of said materials according to the invention, allows to meet the requirements specified in the premises and to overcome the problems posed by treatment methods of the known art.

Obviously a skilled man in the art will be able to change and modify the method described above in order to satisfy specific needs, yet they are all contained in the scope of the invention as defined in the claims listed below.

## Claims

1. Method for the processing of materials comprising a multiple treatment step of the surface of said materials with cold plasma carried out with SF₆ or its mixtures with noble gases, **characterized by** the fact that after each treatment step the material is immersed in gases other than SF₆ containing air or oxygen.

2. Method according to claim 1, in which materials comprise woven fabrics, non-woven fabrics, paper, yarns, films of any type, and similar materials.

3. Method according to claim 1 or 2, comprising the following subsequent steps:
- positioning of the material to be treated in the treatment chamber;
- filling of said treatment chamber with SF₆ or its mixtures;
- generation of plasma under vacuum;
- treatment of said materials with said plasma for a period of time not exceeding 15 minutes.

4. Method according to anyone of the claims from 1 to 3, further comprising a degassing step of the surface of said materials before or during said plasma treatment.

5. Method according to claim 4, in which said degassing step is carried out until residual pressure of the gas leaving the surface of said material is lower than 10⁻² mbar of N₂ equivalent.

6. Method according to claim 5, in which said residual pressure for viscose is between 5×10⁻⁵ and 5×10⁻⁴ mbar of N₂ equivalent, for cotton is between 5×10⁻⁴ and 5×10⁻³ mbar of N₂ equivalent, and for film, PET and technical fabrics is between 10⁻² and 10⁻¹ mbar of N₂ equivalent.

7. Method according to anyone of the claims from 1 to 6, in which plasma is produced at a pressure ranging from 0,1 mbar N₂ equivalent to 20 mbar N₂ equivalent at an electronic temperature ranging from 1 eV to 15 eV for less than 15 minutes.

8. Method according to anyone of the claims from 1 to 7 in which the plasma is produced at a pressure between 0,2 mbar N₂ equivalent and 2 mbar N₂ equivalent, the electronic temperature is between 1 eV and 10 eV for less than 10 minutes.

9. Method according to anyone of the claims 1 to 8 in which the plasma is produced with SF₆ only, the pressure is between 0,2 mbar N₂ equivalent and 0,6 mbar N₂ equivalent, the electronic temperature is between 4 and 7 eV for a period of time between 3 and 8 minutes.

10. Method according to anyone of the claims from 1 to 9, in which plasma is used with discontinuous or continuous methodology.

11. Method for the processing of materials according to anyone of the claims from 1 to 10, in which plasma treatment comprises the following steps either individually or in any combination whatsoever:
a) removal of upper layers from the surface of the material (ETCHING);
b) insertion of atoms or chemical groups in the surface of said material (GRAFTING) in which the continuous flow of reactive components produced in the plasma favours their absorption in the material to be treated, to create easier insertion of functional groups on the surface of the same.
c) deposition of fine metal or polymer film on the surface of said material;
d) activation of the surface of said material through the break-up of chemical bonds and the generation of free radicals on the surface;
e) spontaneous forming of new bonds on the surface of said material without the addition of reactive plasma components.

12. Process for rendering water-proof the surface of materials by means of the method according to anyone of the claims from 1 to 11.

13. Process as described in claim 12 comprising the following steps:
- positioning of the woven fabric, yarn, or non-woven fabric, on a mobile support in a treatment chamber that is brought to a pressure lower than that used for plasma treatment;
- filling of the processing chamber with SF₆ and generation of plasma through radio frequency or low frequency energy with pressure between 0,2 and 10 mbar and electronic temperature between 1 and 10 eV;
- Application of plasma on the surface for less than 10 minutes.

14. Process as described in claim 12 comprising the following steps:
- positioning of the woven fabric, yarn, non-woven fabric, or paper in a treatment chamber of a roll-to-roll system, said chamber being brought to a pressure lower than that of the plasma treatment;
- filling of the treatment chamber with SF₆ and generation of plasma through radio frequency or low frequency energy with pressure between 0,1 and 10 mbar and electronic temperature between 1 and 10 eV;
- Application of plasma on the surface for less than 10 minutes.

15. Process as described in claim 12 comprising the following steps:
- positioning of the woven fabric, yarn, non-woven fabric, or paper in a treatment chamber of a continuous air-vacuum-air system, said chamber being brought to a pressure lower than that of plasma;
- filling of the treatment chamber with SF₆ and generation of plasma through radio frequency or low frequency energy with pressure between 0,2 and 1 mbar and electronic temperature between 5 and 10 eV ;
- Application of plasma on the surface for less than 10 minutes.

16. Process according to claims 13 or 14, in which, when the material to be processed is PET, plasma pressure is between 0,2 and 0,4 mbar, and electronic temperature is approximately 5 eV and treatment time is 1 minute.

17. Process for creating patterns, spots, writings, and similar markings on the surface of the material making selected zones of the material surface water repellent by means of the method according to anyone of the claims 1 to 16.

18. Process for making the surface of materials oil repellent by means of repeated treatment according to the method as described in any one of the claims 1 to 11.

## Patentansprüche

1. Verfahren zum Bearbeiten von Materialien,
umfassend einen mehrfachen Oberflächen-Behandlungsschritt der
Materialien mit kaltem Plasma, das mit SF₆ oder seinem Gemisch mit Edelgasen durchgeführt wird,
**gekennzeichnet durch** die Tatsache, dass nach jedem Behandlungsschritt
das Material in andere Gase als SF₆, die Luft oder Sauerstoff enthalten, getaucht wird.

2. Verfahren nach Anspruch 1,
wobei die Materialien gewebte Textilmaterialien, nicht-gewebte
Textilmaterialien, Papier, Garne, Filme jeder Art und ähnliche Materialien umfassen.

3. Verfahren nach Anspruch 1 oder 2, umfassend die folgenden
nachfolgenden Schritte:
Positionieren des zu behandelnden Materials in der Behandlungskammer;
Füllen der Behandlungskammer mit SF₆ oder seinen Gemischen;
Erzeugen von Plasma unter Vakuum;
Behandlung der Materialien mit dem Plasma für einen Zeitraum, der 15 Minuten nicht überschreitet.

4. Verfahren nach einem der Ansprüche 1 bis 3,
ferner umfassend einen Ausgasungsschritt der Oberfläche der Materialien vor oder während der Plasmabehandlung.

5. Verfahren nach Anspruch 4,
wobei der Ausgasungsschritt durchgeführt wird, bis ein Restdruck des die
Oberfläche des Materials verlassenden Gases kleiner als 10⁻² mbar Stickstoffequivalent ist.

6. Verfahren nach Anspruch 5,
wobei der Restdruck für Viskose zwischen 5x10⁻⁵ und 5x10⁻⁴ mbar
Stickstoffequivalent liegt, für Baumwolle zwischen 5x10⁻⁴ und 5x10⁻³ mbar Stickstoffequivalent liegt, und für Film, PET und technische Textilwaren zwischen 10⁻² und 10⁻¹ mbar Stickstoffequivalent liegt.

7. Verfahren nach einem der Ansprüche 1 bis 6,
wobei Plasma bei einem Druck im Bereich von 0,1 mbar
Stickstoffequivalent bis 20mbar Stickstoffequivalent bei einer Elektronentemperatur im Bereich von 1 eV bis 15 eV für weniger als 15 Minuten erzeugt wird.

8. Verfahren nach einem der Ansprüche 1 bis 7,
wobei Plasma bei einem Druck zwischen 0,2 mbar Stickstoffequivalent
und 2 mbar Stickstoffequivalent bei einer Elektronentemperatur zwischen 1 eV und 10 eV für weniger als 10 Minuten erzeugt wird.

9. Verfahren nach einem der Ansprüche 1 bis 8,
wobei das Plasma nur mit SF₆ hergestellt wird,
wobei der Druck zwischen 0,2 mbar Stickstoffequivalent und 0,6 mbar
Stickstoffequivalent liegt, und
wobei die Elektronentemperatur zwischen 4 eV und 7 eV für eine
Zeitdauer zwischen 3 und 8 Minuten liegt.

10. Verfahren nach einem der Ansprüche 1 bis 9,
wobei Plasma mit diskontinuierlicher oder kontinuierlicher Methodik
verwendet wird.

11. Verfahren zum Bearbeiten von Materialien nach einem der Ansprüche
1 bis 10,
wobei eine Plasmabehandlung die folgenden Schritte entweder individuell
oder in allen möglichen Kombinationen umfasst:
a) Entfernen von oberen Schichten von der Oberfläche des Materials (ETCHING);
b) Einfügen von Atomen oder chemischen Gruppen in die Oberfläche des
Materials (GRAFTING),
wobei der kontinuierliche Strom von reaktiven Komponenten, die in dem
Plasma produziert werden, ihre Absorption in dem zu behandelnden Material begünstigt, um ein erleichtertes Einfügen von funktionalen Gruppen auf der Oberfläche derselben zu erzeugen
c) Abscheidung von Feinmetall oder einem Polymer-Film auf der Oberfläche des Materials
d) Aktivieren der Oberfläche des Materials durch das Aufbrechen von chemischen Bindungen und durch die Erzeugung von freien Radikalen auf der Oberfläche
e) spontanes Bilden von neuen Bindungen auf der Oberfläche des Materials ohne Hinzufügen von reaktiven Plasma-Komponenten

12. Prozess zum Wasserdicht-Machen der Oberfläche von Materialien mittels des Verfahren nach einem der Ansprüche 1 bis 11.

13. Prozess wie in Anspruch 12 beschrieben,
umfassend die folgenden Schritte:
Positionieren des gewebten Textilmaterials, Garns, oder nicht-gewebten
Textilmaterials auf einem beweglichen Halter in einer Behandlungskammer, die auf einen niedrigeren als für die Plasmabehandlung verwendeten Druck gebracht wird;
Füllen der Prozess-Kammer mit SF₆ und Erzeugen eines Plasmas durch
Radio-Frequenz- oder Niederfrequenz-Energie bei einem Druck zwischen 0,2 mbar und 10 mbar und einer Elektronen-Temperatur zwischen 1 eV und 10 eV;
Anwenden eines Plasmas auf die Oberfläche für weniger als 10 Minuten;

14. Prozess wie in Anspruch 12 beschrieben,
umfassend die folgenden Schritte:
Positionieren des gewebten Textilmaterials, Garns, nicht-gewebten
Textilmaterials oder Papiers in einer Behandlungskammer eines Roll-to-Roll-Systems, die auf einen niedrigeren als für die Plasmabehandlung verwendeten Druck gebracht wird;
Füllen der Prozess-Kammer mit SF₆ und Erzeugen eines Plasmas durch
Radio-Frequenz- oder Niederfrequenz-Energie bei einem Druck zwischen 0,1 mbar und 10 mbar und einer Elektronen-Temperatur zwischen 1 eV und 10 eV;
Anwenden eines Plasmas auf die Oberfläche für weniger als 10 Minuten;

15. Prozess wie in Anspruch 12 beschrieben,
umfassend die folgenden Schritte:
Positionieren des gewebten Textilmaterials, Garns, nicht-gewebten
Textilmaterials oder Papiers in einer Behandlungskammer eines kontinuierlichen Luft-Vakuum-Luft-Systems, die auf einen niedrigeren als für die Plasmabehandlung verwendeten Druck gebracht wird;
Füllen der Prozess-Kammer mit SF₆ und Erzeugen eines Plasmas durch
Radiv-Frequenz- oder Niederfrequenz-Energie bei einem Druck zwischen 0,2 mbar und 1 mbar und einer Elektronen-Temperatur zwischen 5 eV und 10 eV;
Anwenden eines Plasmas auf die Oberfläche für weniger als 10 Minuten;

16. Prozess nach Anspruch 13 oder 14,
wobei, wenn das zu verarbeitende Material PET ist,
ein Plasma-Druck zwischen 0,2 mbar und 0,4 mbar beträgt, und die
Elektronentemperatur in etwa 5 eV beträgt und die Behandiungszeit eine Minute beträgt.

17. Verfahren zum Erzeugen von Mustern, Punkten, Schriftzügen und ähnlichen Kennzeichnungen auf der Oberfläche des Materials durch Wasserabweisend-Machen von ausgewählten Zonen der MaterialOberfläche mittels des Verfahrens nach einem der Ansprüche 1 bis 16.

18. Prozess zum Ölabweisend-Machen der Oberfläche von Materialien mittels wiederholter Behandlung gemäß dem Verfahren wie in einem der Ansprüche 1 bis 11 beschrieben.

## Revendications

1. Procédé pour le traitement de matériaux comprenant une étape de traitement multiple de la surface desdits matériaux avec un plasma froid réalisée avec SF₆ ou ses mélanges avec des gaz nobles, **caractérisé par le fait qu'**après chaque étape de traitement, le matériau est plongé dans des gaz différents de SF₆ contenant de l'air ou de l'oxygène.

2. Procédé selon la revendication 1, où les matériaux comprennent des étoffes tissées, des étoffes non tissées, du papier, des fils, des films de tout type et des matériaux similaires.

3. Procédé selon la revendication 1 ou 2, comprenant les étapes subséquentes suivantes :
- positionnement du matériau destiné à être traité dans la chambre de traitement ;
- remplissage de ladite chambre de traitement avec SF₆ ou ses mélanges ;
- formation d'un plasma sous vide ;
- traitement desdits matériaux avec ledit plasma pendant une durée ne dépassant pas 15 minutes.

4. Procédé selon l'une quelconque des revendications 1 à 3, comprenant en outre une étape de dégazage de la surface desdits matériaux avant ou pendant ledit traitement par plasma.

5. Procédé selon la revendication 4, où ladite étape de dégazage est réalisée jusqu'à ce que la pression résiduelle du gaz quittant la surface dudit matériau soit inférieure à 10⁻² mbar d'équivalent N₂.

6. Procédé selon la revendication 5, où ladite pression résiduelle pour la viscose est entre 5 x 10⁻⁵ et 5 x 10⁻⁴ mbar d'équivalent N₂, pour le coton entre 5 et 10⁻⁴ et 5 x 10⁻³ mbar d'équivalent N₂ et pour un film, le PET et les étoffes techniques entre 10⁻² et 10⁻¹ mbar d'équivalent N₂.

7. Procédé selon l'une quelconque des revendications 1 à 6, où le plasma est produit à une pression allant de 0,1 mbar d'équivalent N₂ à 20 mbar d'équivalent N₂ à une température électronique allant de 1 eV à 15 eV pendant moins de 15 minutes.

8. Procédé selon l'une quelconque des revendications 1 à 7, où le plasma est produit à une pression entre 0,2 mbar d'équivalent N₂ et 2 mbar d'équivalent N₂, la température électronique est entre 1 eV et 10 eV pendant moins de 10 minutes.

9. Procédé selon l'une quelconque des revendications 1 à 8, où le plasma est produit avec SF₆ seulement, la pression est entre 0,2 mbar d'équivalent N₂ et 0,6 mbar d'équivalent N₂, la température électronique est entre 4 et 7 eV pendant une durée entre 3 et 8 minutes.

10. Procédé selon l'une quelconque des revendications 1 à 9, où le plasma est utilisé avec une méthodologie discontinue ou continue.

11. Procédé pour le traitement de matériaux selon l'une quelconque des revendications 1 à 10 où le traitement par plasma comprend les étapes suivantes individuellement ou en toute combinaison quelconque :
a) retrait de couches supérieures de la surface du matériau (ATTAQUE) ;
b) insertion d'atomes ou de groupes chimiques dans la surface dudit matériau (GREFFAGE) où l'écoulement continu de composants réactifs produits dans le plasma favorise leur absorption dans le matériau destiné à être traité, pour créer une insertion plus aisée de groupes fonctionnels sur la surface de celui-ci ;
c) dépôt d'un fin film de métal ou de polymère sur la surface dudit matériau ;
d) activation de la surface dudit matériau par la rupture de liaisons chimiques et la production de radicaux libres sur la surface ;
e) formation spontanée de nouvelles liaisons sur la surface dudit matériau sans addition de composants de plasma réactifs.

12. Procédé pour rendre imperméable à l'eau la surface de matériaux au moyen du procédé selon l'une quelconque des revendications 1 à 11.

13. Procédé selon la revendication 12 comprenant les étapes suivantes :
- positionnement de l'étoffe tissée, du fil ou de l'étoffe non tissée sur un support mobile dans une chambre de traitement qui est amenée à une pression inférieure à celle utilisée pour le traitement par plasma ;
- remplissage de la chambre de traitement avec SF₆ et formation d'un plasma par une énergie radiofréquence ou basse fréquence avec une pression entre 0,2 et 10 mbar et une température électronique entre 1 et 10 eV ;
- application du plasma sur la surface pendant moins de 10 minutes.

14. Procédé selon la revendication 12 comprenant les étapes suivantes :
- positionnement de l'étoffe tissée, du fil, de l'étoffe non tissée ou du papier dans une chambre de traitement d'un système rouleau à rouleau, ladite chambre étant amenée à une pression inférieure à celle du traitement par plasma ;
- remplissage de la chambre de traitement avec SF₆ et formation d'un plasma par une énergie radiofréquence ou basse fréquence avec une pression entre 0,1 et 10 mbar et une température électronique entre 1 et 10 eV ;
- application du plasma sur la surface pendant moins de 10 minutes.

15. Procédé selon la revendication 12 comprenant les étapes suivantes :
- positionnement de l'étoffe tissée, du fil, de l'étoffe non tissée ou du papier dans une chambre de traitement d'un système air-vide-air continu, ladite chambre étant amenée à une pression inférieure à celle du plasma ;
- remplissage de la chambre de traitement avec SF₆ et formation d'un plasma par une énergie radiofréquence ou basse fréquence avec une pression entre 0,2 et 1 mbar et une température électronique entre 5 et 10 eV ;
- application du plasma sur la surface pendant moins de 10 minutes.

16. Procédé selon la revendication 13 ou 14, où, quand le matériau destiné à être traité est du PET, la pression du plasma est entre 0,2 et 0,4 mbar et la température électronique est d'approximativement 5 eV et la durée du traitement est 1 minute.

17. Procédé pour créer des motifs, des points, des inscriptions et des marquages similaires sur la surface du matériau rendant des zones choisies de la surface du matériau hydrofuges au moyen du procédé selon l'une quelconque des revendications 1 à 16.

18. Procédé pour rendre la surface de matériaux oléofuge par un traitement répété selon le procédé décrit dans l'une quelconque des revendications 1 à 11.
